# FASCICULE DE BREVET EUROPEEN

(11) **EP 2 906 440 B1**
(45) Date de publication et mention de la délivrance du brevet: **30.03.2022**
(21) Numéro de dépôt: 13786694.3
(22) Date de dépôt: 10.10.2013
(51) Int. Cl.: B60L 50/16, B60L 58/12, B60L 1/00, B60L 1/14, B60L 7/18, B60L 1/02, B60L 15/20

(54) **PROCEDE DE RECUPERATION D'ENERGIE ELECTRIQUE AVEC LISSAGE DE TENSION SUR UN RESEAU ELECTRIQUE EMBARQUE**
METHOD OF ELECTRIC ENERGY RECUPERATION WITH VOLTAGE SMOOTHING OF AN ON-BOARD SUPPLY SYSTEM
REKUPERATIONSVERFAHREN VON ELEKTRISCHER ENERGIE MIT SPANNUNGSGLÄTTUNG FÜR EIN BORDNETZ

(30) Priorité: 10.10.2012 FR 1259637
(43) Date de publication de la demande: 19.08.2015
(73) Titulaire: Renault s.a.s, 92100 Boulogne Billancourt (FR)
(72) Inventeur: DEMURE, Sophie, F-92160 Antony (FR); SAINT-LEGER, Gérard, F-78000 Versailles (FR)
(74) Mandataire: Renault Group
(86) Numéro de dépôt international: PCT/FR2013/052418
(87) Numéro de publication internationale: WO 2014/057223

(56) Documents cités:
- EP-A2- 2 412 559
- DE-A1-102011 054 582
- JP-A- 2009 126 395
- US-A1- 2006 060 399

## Description

L'invention se rapporte aux systèmes d'alimentation électrique de véhicules automobiles à propulsion par un moteur thermique ou à propulsion hybride thermique-électrique, et notamment aux systèmes d'alimentation électrique comprenant un alternateur électrique ou une machine électrique apte à fonctionner en alternateur et à délivrer de l'énergie électrique

Dans le cas d'un véhicule à propulsion thermique ou hybride, on peut être amené à augmenter la tension délivrée par l'alternateur pendant les phases de freinage récupératif du véhicule par exemple, et à rediminuer cette tension quand le véhicule recommence à utiliser l'énergie d'un moteur thermique pour avancer. Les excursions de tension de l'alternateur peuvent se répercuter sur le comportement des consommateurs électriques du véhicule, dont les variations de luminosité, rythme, débit d'air...peuvent être perçus comme erratiques par les occupants du véhicule.

Les demandes de brevet FR2934429 et WO200984381 proposent des régulations en fonction de l'état de charge d'une batterie au plomb et de l'intensité du courant. Les stratégies de pilotage décrites génèrent des variations brutales de tension sur le réseau de bord.

Le document DE 10 2011 054 582 décrit un système d'alimentation électrique comprenant deux batteries montées en parallèle, la seconde batterie ayant une capacité de stockage supérieure à la première batterie. Pendant certaines phases de rechargement, on déconnecte la première batterie pour privilégier une charge plus complète de la deuxième batterie.

Le document EP 2 412 559 décrit un système d'aide à la conduite conçu pour optimiser la gestion de l'énergie électrique d'un véhicule, et notamment pour optimiser les phases de freinage récupératif en tenant compte du style de conduite du conducteur du véhicule. Le système surveille l'énergie de freinage à dissiper, en vue d'étaler cette dissipation dans le temps pour rester en dessous du niveau maximal récupérable par une machine électrique génératrice du véhicule.

Le document JP2009126395 décrit un système de gestion d'un système électrique de véhicule automobile, comprenant deux sous-réseaux interconnectés par un transformateur DC/DC, et alimentés par des batteries de tensions différentes. Pendant certaines phases de freinage récupératif, on alimente la batterie de plus faible voltage sans transformer la tension du courant récupéré par le DC/DC, pour limiter les pertes électriques liées à l'utilisation du DC/DC.

Le document US2006060399 divulgue un système permettant de contrôler la décélération d'un véhicule, comprenant une commande conducteur permettant d'augmenter ou de diminuer une décélération cible et de commander la force de freinage en fonction de cette décélération cible. Le taux de variation de la décélération cible est réglé de manière variable, la décélération cible changeant progressivement lors de l'actionnement en devenant d'autant plus rapide que la durée de réglage de la décélération cible par le conducteur devient plus longue.

L'invention a pour but de proposer unprocédé de récupération d'énergie électrique selon la revendication indépendante 1 et un système d'alimentation électrique d'un véhicule selon la revendication indépendante 8.

Selon un mode de réalisation préférentiel, l'incrément montant de tension est au moins 5 fois inférieur à la première amplitude montante de tension. L'incrément montant de tension peut par exemple être compris entre 0,05V et 0,3V, par exemple être proche de 0,1V. La première amplitude montante de tension peut être comprise entre 0,5V et 1,5V, et de préférence comprise entre 0,75V et 1,25V, par exemple être proche de 1V. La différence entre la tension basse d'alternateur et la tension haute d'alternateur peut être par exemple comprise entre 0,5 et 3V.

Par alternateur, on entend toute machine électrique apte à convertir une énergie mécanique en énergie électrique. Par augmentation de la tension, on entend ici une augmentation en valeur absolue. Par marche de tension, on entend une première augmentation sensiblement linéaire de tension, avec une pente de montée en tension correspondant sensiblement à la pente maximale de tension que l'alternateur est apte à délivrer, suivie d'une rupture de pente et d'un palier de tension, ou d'une rupture de pente et d'une phase de croissance à pente plus modérée. On considère que si l'alternateur est pilotable à des valeurs de tensions variables toutes strictement négatives, un procédé de pilotage de cet alternateur est équivalent à un pilotage de tensions variables toutes strictement positives en inversant les signes, le qualificatif "tension supérieure" s'entendant alors en valeur absolue.

Selon l'invention, on maintient la tension constante pendant un premier intervalle de temps prédéfini, après la rupture de pente.

On peut par exemple ensuite continuer à augmenter la tension délivrée par l'alternateur par une succession de secondes marches de tension représentant chacune sensiblement un même incrément montant de tension, strictement inférieur à l'amplitude de la première marche de tension.

Dans un mode de réalisation préférentiel, on impose sensiblement un même second intervalle de temps entre le début de deux secondes marches de tension.

Le second intervalle de temps peut être par exemple compris entre 0,2s et 1s, par exemple être compris entre 0,25s et 0,35s. Selon une variante de réalisation, l'intervalle de temps séparant le début de la première marche de tension et le début de la seconde marche de tension peut être égal au second intervalle de temps. Selon une autre variante de réalisation, l'intervalle de temps séparant le début de la première marche de tension et le début de la seconde marche de tension peut être supérieur aux seconds intervalles de temps. Selon encore une autre variante de réalisation, le second intervalle de temps peut être variable en fonction de l'évolution de l'état de charge de la batterie.

Avantageusement, on continue à augmenter la tension délivrée par l'alternateur jusqu'à ce que l'une des deux conditions suivantes soit satisfaite : la tension de l'alternateur atteint la tension haute d'alternateur, ou le véhicule ne se trouve plus dans le second type de phase de roulage.

Une fois la tension haute d'alternateur atteinte, on maintient de préférence la tension de l'alternateur à cette tension haute d'alternateur jusqu'à ce qu'une des conditions suivantes soit vérifiée : une valeur caractéristique de l'état de charge de la batterie atteint une valeur seuil de recharge, ou le véhicule ne se trouve plus dans le second type de phases de roulage.

Lorsque une valeur caractéristique de l'état de charge de la batterie atteint une valeur seuil de recharge, ou lorsque le véhicule ne se trouve plus dans le second type de phases de roulage, et que la tension de l'alternateur est supérieure à une tension de fin de charge prédéfinie, on peut imposer une diminution de la tension délivrée par l'alternateur, de la tension maximale atteinte par l'alternateur, vers la tension de fin de charge, en imposant d'abord une troisième marche de tension ayant une amplitude descendante de tension prédéfinie, si la différence entre la tension maximale atteinte et la tension de fin de charge est strictement supérieure en valeur absolue à l'amplitude descendante de tension,

La tension de fin de charge peut être fonction des conditions de roulage ainsi que de l'historique des conditions de roulage du véhicule. Si la différence entre la tension maximale atteinte et la tension de fin de charge est inférieure ou égale en valeur absolue à la troisième amplitude de tension, on peut imposer une marche de tension descendante directement de la tension maximale atteinte vers la tension de fin de charge.

Avantageusement, après la troisième marche descendante de tension, on continue ensuite à faire décroître la tension vers la tension de fin de charge, à une pente de décroissance strictement inférieure en moyenne à la pente de la troisième marche de tension.

On peut par exemple imposer après la troisième marche de tension, une succession de quatrièmes marches de tension représentant chacune sensiblement un même incrément descendant de tension strictement inférieur à l'amplitude descendante de la troisième marche de tension, et séparées entre elles d'un même incrément de temps de descente.

Selon un mode de réalisation préférentiel, l'incrément descendant de tension est au moins 5 fois inférieur à l'amplitude descendante de la troisième marche de tension. L'incrément descendant de tension peut par exemple être compris entre 0,05V et 0,3V, par exemple être proche de 0,1V. L'amplitude descendante de la troisième marche de tension peut être comprise entre 0,5V et 1,5V, et de préférence comprise entre 0,75V et 1,25V, par exemple être proche de 1V. L'amplitude descendante de la troisième marche de tension peut être de valeur fixe, indépendante de l'historique de voltage antérieur de l'alternateur. Elle peut par exemple être sensiblement égale à la première amplitude montante de tension. Selon une autre variante de réalisation, l'amplitude descendante de tension peut être une fonction, par exemple peut être proportionnelle, à la différence entre la tension maximale atteinte et la tension de fin de charge.

L'intervalle de temps de descente peut être par exemple compris entre 0,2s et 1s, par exemple être compris entre 0,25s et 0,35s.

L'invention propose également un système d'alimentation en énergie électrique d'un véhicule, le système comprenant :
- un réseau comportant au moins un organe consommateur électrique,
- une batterie d'accumulation électrique connectée au réseau,
- un alternateur pilotable connecté au réseau, et apte à délivrer au réseau une énergie électrique sous une tension de consigne pilotable à au moins une tension basse d'alternateur régulée à une valeur constante strictement positive, et à une tension haute d'alternateur régulée à une valeur constante strictement supérieure à la tension basse d'alternateur.

Le système comprend une unité de commande électronique reliée à l'alternateur et à la batterie, et configurée pour imposer à l'alternateur, lors de conditions de roulage prédéterminées du véhicule, une augmentation de la tension délivrée par l'alternateur, d'une tension basse d'alternateur vers une tension haute d'alternateur. L'unité de commande électronique est configurée pour imposer une première marche de tension d'amplitude prédéfinie, suivie d'une rupture de pente de la courbe de tension délivrée par l'alternateur en fonction du temps, et suivie d'une courbe croissante de tension à une pente moyenne strictement inférieure à la pente de montée en tension de la première marche.

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est une représentation schématique d'un système d'alimentation selon l'invention,
- la figure 2 est un graphe simplifié des variations par rapport au temps de la tension délivrée par l'alternateur du système d'alimentation de la figure 1, pendant une phase particulière de roulage d'un véhicule comprenant le système d'alimentation de la figure 1,
- la figure 3 est un graphe simplifié des variations par rapport au temps de différentes grandeurs pendant une autre phase particulière de roulage du véhicule comprenant le système d'alimentation de la figure 1.

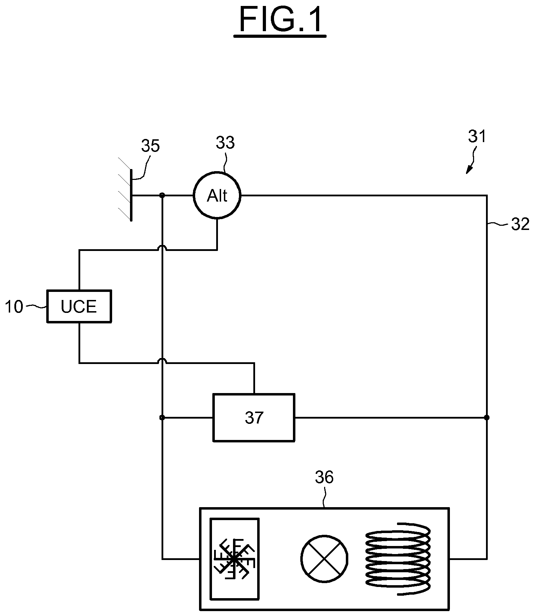

Tel qu'illustré sur la figure 1, un système 31 d'alimentation électrique d'un véhicule comprend un réseau électrique 32, un alternateur 33, une batterie 37 par exemple une batterie de type lithium-ion ou un ensemble de plusieurs stockages d'énergie (Lithium +Plomb, Plomb+supercapacité,...), et une unité de commande électronique 10. L'alternateur 33 est apte à convertir de l'énergie mécanique prélevée sur un arbre relié à un moteur thermique (non représenté) en énergie électrique envoyée sur le réseau électrique 32.

Sur le réseau électrique 32 sont disposés des consommateurs électriques 36, comme par exemple un dispositif de climatisation, des moyens d'éclairage et des moyens de chauffage. Les consommateurs électriques 36 sont branchés en parallèle sur le réseau 32. Le réseau 32 comprend une mise à la masse 35 sur le châssis du véhicule. Le réseau 32 alimente également un démarreur apte à lancer le moteur thermique du véhicule afin d'initier le premier cycle de combustion.

L'unité de commande électronique 10 est reliée à l'alternateur 33, auquel elle est apte à imposer une tension de consigne variable et notamment, auquel elle est apte à imposer deux valeurs distinctes de valeurs de consigne, une première valeur non nulle notée Valt_basse et une seconde valeur notée Valt_haute strictement plus élevée en valeur absolue que la première valeur. On peut par exemple choisir une convention de signe de tension telle que Valt_basse soit strictement positive et que Valt_haute soit strictement supérieure à Valt_basse.

Par « bornes » de chacun des éléments, on entend les deux points de connexion de cet élément au réseau 32.

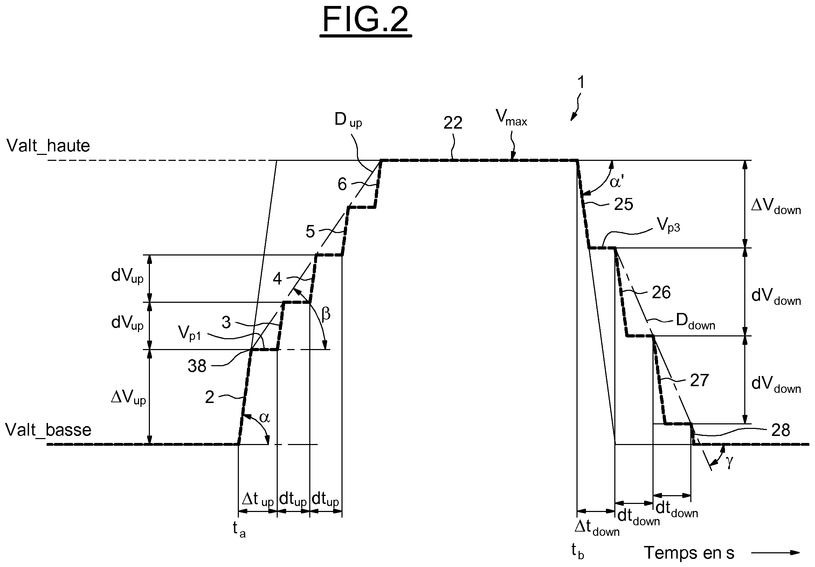

La figure 2 illustre un exemple de courbe de tension délivrée par l'alternateur 33 de la figure 1 pendant l'intervalle de temps incluant une phase de freinage récupératif du véhicule sur lequel est embarqué l'alternateur. L'intervalle de temps correspondant à une phase de freinage récupératif peut par exemple être identifié par l'unité de commande électronique 10 par un signal de coupure d'injection moteur débutant à l'instant tₐ et se terminant par un instant t_{b}.

Sur l'exemple illustré sur la figure 2, avant la coupure d'injection moteur, l'alternateur 33 débite du courant à la tension basse d'alternateur Valt_basse. L'unité de commande électronique 10 est configurée pour, si la coupure d'injection moteur dure suffisamment longtemps, amener la consigne de tension d'alternateur à la valeur de tension haute d'alternateur Valt_haute, supérieure à la tension à vide initiale de la batterie.

Typiquement, la tension basse d'alternateur peut être choisie de manière à définir une tension à vide minimale acceptable pour la batterie 37 ou pour une autre batterie branchée au réseau, et la tension haute d'alternateur peut être choisie de manière à autoriser un surcroît de recharge de la batterie 37 pendant des phases de roulages spécifiques, par exemple des phases de freinage récupératif. L'augmentation de la tension délivrée par l'alternateur va permettre à la batterie 37 de recevoir un courant de recharge de l'alternateur 33. Si la tension à vide de la batterie était initialement supérieure à la tension basse d'alternateur Valt basse, le sens de courant arrivant à la batterie 37 va s'inverser, la batterie ne contribuant plus à alimenter le réseau 32 mais contribuant à absorber une partie du courant délivré par l'alternateur 33.

Cependant, même si la batterie 37 absorbe une partie du courant délivré par l'alternateur 33, l'augmentation de tension de l'alternateur peut créer un surcroît de tension sur le réseau 32 qui peut devenir perceptible au niveau des différents consommateurs 36, par exemple par un surcroît de luminosité des phares de l'éclairage intérieur du véhicule, par une accélération du rythme des essuie-glace, par une augmentation du débit d'air soufflé à l'intérieur de l'habitacle, etc.

Afin d'éviter de telles variations qui pourraient perturber les occupants du véhicule, la transition de la tension d'alternateur basse vers la tension d'alternateur haute est effectuée comme suit par l'unité de commande électronique. L'unité de commande électronique 10 déclenche une première marche montante de tension 2 d'amplitude prédéfinie ΔVᵤₚ, puis elle maintient la tension de l'alternateur constante pendant un intervalle de temps Δtᵤₚ, lui imposant ainsi un premier plateau de tension Vₚ₁.

La première amplitude montante de tension ΔVᵤₚ est choisie de manière à ne pas provoquer de changement perceptible au niveau des différents consommateurs électriques « visibles » par les occupants du véhicule. Pendant le plateau de tension Vₚ₁, le courant entrant dans la batterie 37 a le temps de se stabiliser et la batterie 37 est à nouveau apte à recevoir un éventuel surcroît de courant provoqué par un nouveau surcroît de tension. L'unité de commande électronique 10 pilote alors la consigne de tension de l'alternateur 33 de manière à provoquer une seconde marche de tension 3 d'amplitude dVᵤₚ inférieure à l'amplitude ΔVᵤₚ de la première marche de tension. Elle maintient alors à nouveau la tension de l'alternateur constante pendant un intervalle de temps prédéfini dtᵤₚ. Les amplitudes ΔVᵤₚ et dVᵤₚ de la première et de la seconde marche de tension peuvent par exemple être prédéfinies à partir d'essais préalables sur véhicule, essais permettant de connaître des amplitudes que l'on peut imposer sans perturber de manière perceptible le comportement des consommateurs électriques 36.

L'intervalle de temps Δtᵤₚ séparant le début de la première marche de tension et le début de la seconde marche de tension 3 et l'intervalle de temps dtᵤₚ séparant le début de la seconde marche de tension du début d'une troisième marche de tension 4 peuvent aussi être déterminés lors d'essais préalables. Ils peuvent être du même ordre de grandeur, ou peuvent être différents. L'intervalle de temps dtᵤₚ peut être raccourci si l'incrément montant de tension dVᵤₚ est très faible. L'unité de commande électronique 10 continue ensuite à augmenter la tension de consigne de l'alternateur 33 en effectuant d'autres secondes marches d'amplitude sensiblement égales à celle de la seconde marche 3, les secondes marches étant représentées par les références 4, 5, 6 sur la figure 2. Si la durée de la coupure d'injection est suffisante, l'unité de commande électronique amène ainsi la tension de l'alternateur 33 à une tension maximale Vₘₐₓ qui est égale à la tension haute d'alternateur Valt haute.

Si la durée de la coupure d'injection ne permet pas d'atteindre ainsi la tension haute d'alternateur, l'unité de commande électronique arrête l'accroissement de la tension d'alternateur à la valeur Vₘₐₓ correspondant au dernier plateau atteint lorsque cesse la coupure d'injection moteur. Le choix de l'amplitude ΔVᵤₚ de la première marche de tension permet d'atteindre rapidement une première tension qui, en fonction du niveau de charge de la batterie 37, peut permettre de commencer à recharger la batterie 37 si sa tension à vide est inférieure ou égale à la tension de premier palier Vₚ₁. Les occupants du véhicule ne perçoivent pas l'augmentation de tension puisque le comportement des consommateurs électriques reste inchangé. Au fur et à mesure que la batterie 37 s'adapte au courant qui lui est délivré, l'accroissement par les seconds paliers de tension de la tension d'alternateur permet de rejoindre la tension d'alternateur haute à la vitesse maximale d'accroissement de tension qui ne perturbe pas le comportement des consommateurs.

Une fois atteinte la tension haute d'alternateur, l'unité de commande électronique maintient la tension d'alternateur constante jusqu'à la fin de la coupure d'injection moteur à l'instant t_{b}. De même que lors de la montée, l'unité de commande électronique 10 impose alors une marche de tension descendante 25 ou troisième marche de tension, de troisième amplitude descendante ΔV_{down}, cette marche étant suivie d'un plateau de tension à une tension de troisième palier Vₚ₃. La troisième amplitude descendante ΔV_{down} est choisie aussi grande que possible sans créer de perturbations sensibles au niveau du comportement des consommateurs électriques 36. L'intervalle de temps Δt_{down} séparant le début de la troisième marche 25 du début d'une quatrième marche 26 et qui détermine la longueur du plateau suivant la troisième marche 25 est choisi de manière à ce que la marche de tension descendante suivante ne perturbe pas le comportement des consommateurs 36. L'unité de commande électronique impose alors une série de quatrièmes marches de tension descendantes 26, 27 ayant pour amplitude un incrément descendant dV_{down} et suivies chacune d'un plateau de tension, l'intervalle de temps dt_{down} séparant le début de deux quatrièmes marches de tension successives étant choisi de manière à ramener la tension d'alternateur à la tension d'alternateur basse Valt_basse atteinte par une dernière marche de tension descendante 28 aussi rapidement que possible sans perturber le comportement des consommateurs 36.

L'unité de commande électronique peut également être programmée pour appliquer ce type de succession de marches de tension montante puis descendante, avec à chaque fois une première marche montante et une première marche descendante d'amplitude prédéfinie supérieure à l'amplitude des marches suivantes pour provoquer un augmentation temporaire de tension soit entre la tension basse d'alternateur et une tension intermédiaire d'alternateur, par exemple pour effectuer un rechargement partiel de la batterie 37 au cours d'un roulage autoroutier, ou pour passer d'une tension intermédiaire d'alternateur déjà atteinte à la tension haute d'alternateur si une phase de freinage récupératif se déclenche.

Dans ce dernier cas, la phase de descente en tension peut alors comprendre une première marche d'amplitude ΔV_{down} prédéfinie suivie de marches d'amplitude inférieures jusqu'à ramener la tension de l'alternateur non pas à la tension intermédiaire de l'alternateur mais à la tension basse d'alternateur.

Dans l'éventualité où le profil de montée puis redescente en tension est utilisé pour passer de la tension basse d'alternateur à une tension intermédiaire d'alternateur, par exemple pendant une phase de roulage autoroutier, la durée pendant laquelle l'unité de commande électronique 10 maintient la tension d'alternateur à la tension maximale atteinte Vₘₐₓ, qui est alors la tension intermédiaire d'alternateur, peut être conditionnée soit par une modification des conditions de roulage, par exemple si un freinage récupératif intervient à ce moment, soit pour entamer une phase de descente par le fait que la batterie a atteint un niveau de charge prédéfini jugé suffisant pour ne pas prolonger la surconsommation provoquée par l'élévation de la tension d'alternateur.

La succession de seconds paliers 3, 4, 5, 6 présentant tous un même incrément montant de tension et rythmés par un même intervalle de temps dtᵤₚ, séparant le début de deux secondes marches successives, est une manière simple de continuer à augmenter la tension d'alternateur après que celle-ci ait atteint la tension de premier plateau Vₚ, tout en laissant à la batterie 37 et au réseau 32 le temps de s'adapter aux augmentations ultérieures de tension -c'est-à-dire aux augmentations de tension au-delà de la valeur Vₚ₁. Ainsi la suite de l'augmentation de tension n'est pas perceptible au niveau du comportement des consommateurs 36.

La série de secondes marches montantes de tension et de quatrièmes marches descendantes de tension pourraient être remplacées respectivement par une rampe montante et par une rampe descendante de tension.

On peut ainsi configurer l'unité de commande électronique de manière à ce qu'elle amène d'abord la tension de l'alternateur de la tension basse d'alternateur vers la tension Vₚ₁ de premier plateau avec une pente d'augmentation de tension par rapport au temps représentée par un angle a et correspondant à la vitesse maximale d'accroissement de tension permise par l'alternateur. L'unité de commande électronique 10 peut ensuite continuer de faire croître la tension avec un rythme plus lent représenté par exemple par une vitesse d'accroissement de tension d'un angle β inférieur à a pour amener la tension de l'alternateur de la tension de premier plateau Vₚ₁ à la tension maximale à atteindre Vₘₐₓ. Dans les deux cas, la courbe de tension subit une rupture de pente 38 à la fin de la montée de la première marche de tension.

Dans ce cas, les paramètres prédéfinis sont la première amplitude montante de tension ΔVᵤₚ, la tension maximale à atteindre Vₘₐₓ et la pente β d'accroissement de tension pour amener la tension de l'alternateur à la tension maximale Vₘₐₓ désirée.

On peut prévoir un plateau de tension entre le moment où la tension de l'alternateur atteint la tension de premier palier Vₚ₁=Valt_basse + ΔVᵤₚ et le moment où est appliquée la seconde rampe de tension de pente β. On peut choisir d'imposer la pente β d'accroissement de tension dès que la tension de premier palier Vₚ₁=Valt_basse + ΔVᵤₚ est atteint, sans marquer de plateau de tension.

La série de secondes marches de tension alors remplacée par une progression linéaire de tension le long d'une droite Dᵤₚ représentée en trait d'axe sur la figure 2.

De manière similaire, on pourrait remplacer la série de quatrièmes marches descendantes de tension par une décroissance sensiblement linéaire (représentée par une droite D_{down} en trait d'axe sur la figure 2), avec une vitesse de décroissance représentée par un angle y, d'amplitude strictement inférieure à une pente a' maximale de décroissance en tension de l'alternateur, la pente α' étant utilisée pour effectuer le passage de tension de l'alternateur de la valeur maximale Vₘₐₓ atteinte, à la valeur Vmax-ΔV_{down} =Vₚ₃.

Sur la figure 2, on a représenté la droite Dᵤₚ comme passant par la fin de la première rampe d'accroissement de tension de la première marche 2, sans plateau intermédiaire de tension. On a en revanche représenté la droite de décroissance D_{down} comme passant par la fin d'un plateau de tension succédant à la première marche descendante 25 de tension de l'alternateur. On peut envisager des variantes de réalisation dans lesquelles on intercale un plateau de tension entre la fin de la première rampe 2 et la droite d'accroissement Dᵤₚ et/ou dans lesquelles on n'effectue pas de plateau de tension entre la fin de la première rampe descendante de tension 25 et la droite de décroissance D_{down}.

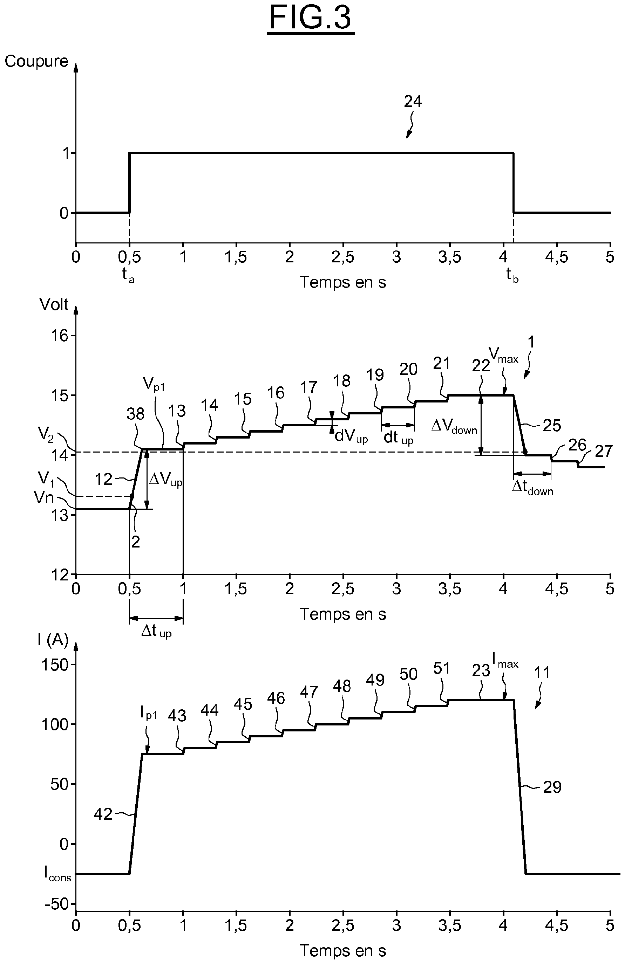

La figure 3 illustre en parallèle l'évolution d'un signal de coupure d'injection moteur sur une courbe 24, l'évolution -par rapport à la même échelle de temps- de la tension -courbe 1- de l'alternateur 33, et l'évolution -représentée par une courbe 11- du courant reçu par la batterie.

Le signal de coupure d'injection moteur peut être par exemple une fonction booléenne qui passe d'une valeur nulle à une valeur égale à 1 à un premier instant tₐ correspondant au début d'une phase de freinage récupératif, et repassant la valeur 0 à un instant t_{b}, ici légèrement supérieur à 4 secondes, et correspondant à la fin d'une phase de freinage récupératif.

La tension de l'alternateur 33 se trouve initialement à une valeur Vₙ qui peut par exemple correspondre à la tension basse d'alternateur Valt_basse ou qui peut correspondre à une tension intermédiaire d'alternateur comprise entre Valt_basse et Valt_haute. La tension à vide de la batterie avant l'étape de freinage récupératif est représentée par une valeur V₁. La tension à vide de la batterie 37 à l'instant t_{b} où la coupure d'injection prend fin est représentée par une valeur V₂. Lorsque l'unité de commande électronique 10 reçoit, à l'instant tₐ, le signal 24 lui indiquant que l'injection a été coupée, elle augmente -de préférence à la vitesse d'accroissement de tension maximale possible- la tension de l'alternateur, d'un incrément correspondant à la première amplitude montante de tension ΔVᵤₚ. Elle maintient alors la valeur de l'alternateur constante jusqu'à ce que s'écoule un intervalle de temps Δtᵤₚ à partir du début de la première marche de tension ici référencée 12.

L'unité de commande électronique impose alors une succession de secondes marches de tension référencées ici 13, 14, 15, 16, 17, 18, 19, 20, 21 correspondant à un même incrément montant de tension dVᵤₚ et séparé d'un même intervalle de temps dtᵤₚ. Quand la tension de l'alternateur atteint une tension Vₘₐₓ, qui peut par exemple correspondre à la tension haute d'alternateur, l'unité de commande électronique maintient la tension constante jusqu'à ce que le signal 24 lui indique à l'instant t_{b} que l'injection moteur a repris. Si la fin de la coupure de l'injection survient avant que la tension de l'alternateur atteigne la valeur Valt_haute ou atteigne la tension intermédiaire d'alternateur prévue, le scénario de décroissance de tension est déclenché de manière similaire à partir de la tension maximale Vmax atteinte.

Elle effectue alors la redescente en tension suivant le scénario déjà décrit sur la figure 2. Il se trouve que, au cours de la première marche montante de tension 12, la tension de l'alternateur est ici passée au dessus de la tension à vide V₁ qui caractérisait la batterie avant l'étape de freinage récupératif. Au moment où la tension franchit cette valeur V₁, la courbe de courant 11 de la batterie change de signe. Avec la convention de la figure 3, Avant l'étape de freinage récupératif, le courant de batterie est négatif pour traduire le fait que la batterie alimente le réseau 32, puis quand la tension de l'alternateur franchit la tension V₁, le courant de batterie devient positif par un accroissement 42 de courant, car la batterie reçoit un courant entrant de recharge.

Le premier plateau de tension à la tension Vₚ₁ se traduit par un plateau de courant à une intensité Iₚ₁. Les secondes marches de tension 13, 14, ....21 provoquent des secondes marches de courant 43, 44, ....49, 50, 51. Le plateau de tension 22 à la tension maximale atteinte Vₘₐₓ provoque un plateau de courant 23 à une tension maximale atteinte Iₘₐₓ. Lorsque la tension de l'alternateur redescend de la tension Vₘₐₓ à la tension Vₘₐₓ-ΔV_{down} correspondant à la troisième marche (descendante) de tension, la tension de l'alternateur passe sous la tension V₂ à vide de la batterie, provoquant une nouvelle inversion du courant de la batterie 37 qui se remet à débiter dans le réseau 32.

La portion de droite 29 vers la fin de la courbe 11 traduit ce passage rapide du courant maximal de charge de la batterie Iₘₐₓ à un courant de batterie négatif correspondant à la consommation du réseau 32.

L'objet de l'invention ne se limite pas aux exemples de réalisation décrits et peut faire l'objet de nombreuses variantes, aussi bien en ce qui concerne l'agencement des différents éléments du système 31, que les valeurs de la tension haute d'alternateur, de la tension basse d'alternateur, de la tension intermédiaire d'alternateur, des conditions dans lesquelles on choisit d'appliquer la tension intermédiaire d'alternateur ou dans lesquelles on choisit de basculer vers la tension haute d'alternateur. L'historique de montée avec une première marche plus importante que les suivantes peut être appliqué lors de la transition de la tension basse d'alternateur vers une tension intermédiaire d'alternateur (Vₘₐₓ) inférieure à la tension haute d'alternateur et imposée par exemple au moment d'un roulage autoroutier, ou lors de la transition d'une telle tension intermédiaire d'alternateur vers une tension haute d'alternateur correspondant à la tension maximale imposée à l'alternateur lors des phases de freinage récupératif par exemple. Il peut bien sûr être appliqué à une transition de la tension basse d'alternateur vers la tension haute d'alternateur. De même, le profil descendant de tension selon l'invention, avec une première marche de tension plus importante que les suivantes, peut être appliqué à une transition de la tension haute d'alternateur vers la tension basse d'alternateur, à une transition de la tension haute d'alternateur vers une tension intermédiaire d'alternateur, ou à une transition d'une tension intermédiaire d'alternateur vers une tension basse d'alternateur. Les durées séparant les débuts de chaque marche en montée peuvent être identiques, variables de manière croissante ou décroissante suivant un motif prédéfini, ou variables en fonction de paramètres de recharge de la batterie, par exemple en fonction du courant de recharge de la batterie. L'intervalle de temps séparant le début de la première marche de tension du début de la seconde marche de tension peut être identique, ou peut être différent, ou peut participer à un même motif de progression de durée que les intervalles de temps séparant les marches de tension suivantes. De manière similaire, les intervalles de temps séparant deux marches de tension lors de la phase de décroissance de tension peuvent être égaux, ou suivre des règles similaires, ou suivre des règles de progression différentes, que les règles définissant les intervalles séparant les marches de tension montantes. Les amplitudes des secondes marches de tension peuvent être toutes égales, ou peuvent suivre une progression régulière prédéfinie, à condition de rester d'amplitude sensiblement inférieure à l'amplitude de la première marche de tension (par exemple au moins cinq fois inférieures à l'amplitude de la première marche de tension).

Le profil incrémental d'accroissement puis de décroissance de la tension selon l'invention peut être appliqué à différents systèmes d'alimentation embarqués sur un véhicule, dès que des variations fréquentes de tension du réseau électrique de bord sont requises entre deux tensions non nulles.

L'invention peut être utilisée pour un système d'alimentation d'un véhicule à propulsion par un moteur thermique. Elle peut également être utilisée pour un système d'alimentation électrique d'un véhicule à propulsion hybride thermique électrique. Elle peut être utilisée pour définir le profil de tension délivrée par une machine électrique apte à fonctionner en générateur sur un véhicule mû par un moteur thermique, à motorisation hybride thermique-électrique ou à propulsion électrique seule.

Le système selon l'invention permet de réduire la consommation globale en carburant du véhicule, de prolonger la durée de vie de la batterie, et d'assurer un environnement stable et confortable dans l'habitacle, malgré les variations de tension imposées à l'alternateur.

## Revendications

1. Procédé de récupération d'énergie électrique, au cours d'une phase de décélération d'un véhicule automobile équipé d'au moins une batterie (37) d'accumulation électrique connectée à un réseau électrique (32) comportant au moins un organe (36) consommateur électrique et un alternateur (33) pilotable connecté au réseau électrique (32), dans lequel on impose une tension basse d'alternateur (Valt_basse) régulée à une valeur constante pendant un premier type de phases de roulage du véhicule, et l'on impose une tension haute d'alternateur (Valt_haute) régulée à une valeur constante plus élevée que la tension basse d'alternateur (Valt_basse) pendant un second type de phases de roulage du véhicule, telles qu'une phase de freinage récupératif du véhicule, **caractérisé en ce que** :
- la transition de la tension basse d'alternateur (Valt_basse) vers la tension haute d'alternateur (Valt_haute) se fait en imposant une première marche de tension (2,12) d'amplitude prédéfinie (ΔVᵤₚ), suivie d'une rupture de pente (38) de la courbe de tension, ladite courbe de tension délivrée par l'alternateur en fonction du temps enchaînant ensuite sur au moins une seconde phase de montée en tension à une pente moyenne (β) strictement inférieure à la pente (α) de montée en tension de la première marche (2,12),
- après la rupture de pente (38), on maintient la tension constante à un premier palier de tension (Vₚ₁) pendant un premier intervalle de temps prédéfini, après le premier palier, on continue à augmenter la tension délivrée par l'alternateur (33) par une succession de secondes marches de tension (3, 4, 5, 6, 13, 14, 15, 16, 17, 18, 19, 20, 21) représentant chacune un incrément montant (dVᵤₚ) de tension de même amplitude ou d'amplitudes suivant une progression régulière prédéfinie, strictement inférieures à l'amplitude de la première marche de tension (ΔVᵤₚ).

2. Procédé selon la revendication 1, dans lequel on impose un même second intervalle (dtᵤₚ) de temps entre le début de deux secondes marches de tension.

3. Procédé selon l'une quelconque des revendications précédentes, dans lequel on continue à augmenter la tension délivrée par l'alternateur (33) jusqu'à ce que l'une des deux conditions suivantes soit satisfaite : la tension de l'alternateur (33) atteint la tension haute d'alternateur (Valt_haute) ou le véhicule ne se trouve plus dans le second type de phases de roulage.

4. Procédé selon la revendication 3, dans lequel, une fois la tension haute d'alternateur (Valt_haute) atteinte, on maintient la tension de l'alternateur (33) à cette tension haute d'alternateur (Vmax, Valt_haute) jusqu'à ce qu'une des conditions suivantes soit vérifiée : une valeur caractéristique de l'état de charge de la batterie (37) d'accumulation électrique atteint une valeur seuil de recharge, ou le véhicule ne se trouve plus dans le second type de phases de roulage.

5. Procédé selon l'une quelconque des revendications précédentes, dans lequel, lorsqu'une valeur caractéristique de l'état de charge de la batterie (37) d'accumulation électrique atteint une valeur seuil de recharge, ou lorsque le véhicule ne se trouve plus dans le second type de phases de roulage, et que la tension de l'alternateur (33) est supérieure à une tension de fin de charge prédéfinie (Valt_basse), on impose une diminution de la tension délivrée par l'alternateur (33), de la tension maximale (Vₘₐₓ) atteinte par l'alternateur (33), vers la tension de fin de charge, en imposant d'abord une troisième marche descendante de tension (25) ayant une amplitude descendante de tension prédéfinie, si la différence entre la tension maximale atteinte et la tension de fin de charge est strictement supérieure en valeur absolue à l'amplitude descendante de tension,

6. Procédé selon la revendication 5, dans lequel on continue ensuite à faire décroître la tension vers la tension de fin de charge, à une pente de décroissance (γ) strictement inférieure en moyenne à la pente de la troisième marche de tension (α').

7. Procédé selon la revendication 5, dans lequel on impose après la troisième marche de tension (25), une succession de quatrièmes marches de tension (26, 27) représentant chacune sensiblement un même incrément descendant de tension (dV_{down}) strictement inférieur à l'amplitude descendante (ΔV_{down}) de la troisième marche de tension (25), et séparées entre elles d'un même incrément de temps de descente (dtdown).

8. Système (31) d'alimentation en énergie électrique d'un véhicule, le système comprenant :
- un réseau électrique (32) comportant au moins un organe (36) consommateur électrique,
- une batterie (37) d'accumulation électrique connectée au réseau électrique (32),
- un alternateur (33) pilotable connecté au réseau électrique (32), et apte à délivrer au réseau électrique (32) une énergie électrique sous une tension de consigne pilotable à au moins une tension basse d'alternateur (Valt_basse) régulée à une valeur constante (Valt_basse) strictement positive, et à une tension haute d'alternateur (Valt_haute) régulée à une valeur constante strictement supérieure à la tension basse d'alternateur (Valt_basse) **caractérisé en ce que** le système (31) d'alimentation en énergie électrique d'un véhicule comprend une unité de commande électronique (10) reliée à l'alternateur (33) et à la batterie (37) d'accumulation électrique, et configurée pour imposer à l'alternateur (33), lors de conditions de roulage prédéterminées du véhicule comme lors d'une phase de freinage récupératif du véhicule, une augmentation de la tension délivrée par l'alternateur (33), d'une tension basse d'alternateur (Valt_basse) vers une tension haute d'alternateur (Valt_haute), l'unité de commande électronique (10) étant configurée pour imposer une première marche de tension (2, 12) d'amplitude prédéfinie (ΔVᵤₚ), suivie d'une rupture de pente (38) de la courbe de tension délivrée par l'alternateur en fonction du temps, et suivie d'une courbe croissante de tension à une pente moyenne (β) strictement inférieure à la pente (α) de montée en tension de la première marche (2, 12), pour maintenir la tension constante à un premier palier de tension (Vₚ₁) pendant un premier intervalle de temps prédéfini après la rupture de pente (38) et pour continuer à augmenter, après le premier palier, la tension délivrée par l'alternateur (33) par une succession de secondes marches de tension (3, 4, 5, 6, 13, 14, 15, 16, 17, 18, 19, 20, 21) représentant chacune un incrément montant (dVᵤₚ) de tension de même amplitude ou d'amplitudes suivant une progression régulière prédéfinie, strictement inférieures à l'amplitude de la première marche de tension (ΔVᵤₚ)_{.}

## Patentansprüche

1. Verfahren zur Rückgewinnung elektrischer Energie während einer Verzögerungsphase eines Kraftfahrzeugs, das mit mindestens einer elektrischen Speicherbatterie (37) versehen ist, die mit einem Stromnetz (32) verbunden ist, das mindestens ein stromverbrauchendes Element (36) und einen mit dem Stromnetz (32) verbundenen steuerbaren Generator (33) aufweist, wobei während eines ersten Typs von Fahrphasen des Fahrzeugs eine auf einen konstanten Wert geregelte Generator-Niederspannung (Valt_basse) vorgegeben wird, und während eines zweiten Typs von Fahrphasen des Fahrzeugs, wie eine Phase regenerativen Bremsens des Fahrzeugs, eine auf einen konstanten Wert, der höher ist als die Generator-Niederspannung (Valt_basse), geregelte Generator-Hochspannung (Valt _haute) vorgegeben wird, **dadurch gekennzeichnet, dass**
- der Übergang von der Generator-Niederspannung (Valt_basse) zur Generator-Hochspannung (Valt_haute) durch Vorgabe einer ersten Spannungsstufe (2, 12) vordefinierter Amplitude (ΔVᵤₚ) gefolgt von einem Steigungsbruch (38) der Spannungskurve erfolgt, wobei die vom Generator abhängig von der Zeit gelieferte Spannungskurve anschließend mit mindestens eine zweite Phase des Spannungsanstiegs mit einer mittleren Steigung (β) strikt niedriger als die Steigung (α) des Spannungsanstiegs der ersten Stufe (2, 12) fortfährt,
- nach dem Steigungsbruch (38) die Spannung während eines ersten vordefinierten Zeitintervalls auf einem ersten Spannungsplateau (Vₚ₁) konstant gehalten wird, nach dem ersten Plateau weiter die vom Generator (33) gelieferte Spannung durch eine Folge zweiter Spannungsstufen (3, 4, 5, 6, 13, 14, 15, 16, 17, 18, 19, 20, 21) erhöht wird, die je ein ansteigendes Spannungsinkrement (dVᵤₚ) gleicher Amplitude oder Amplituden gemäß einer vordefinierten gleichmäßigen Progression darstellen, die strikt niedriger als die Amplitude der ersten Spannungsstufe (ΔVᵤₚ) sind.

2. Verfahren nach Anspruch 1, wobei ein gleiches zweites Zeitintervall (dtᵤₚ) zwischen dem Beginn von zwei zweiten Spannungsstufen vorgegeben wird.

3. Verfahren nach einem der vorhergehenden Ansprüche, wobei die vom Generator (33) gelieferte Spannung weiter erhöht wird, bis eine der zwei folgenden Bedingungen erfüllt ist: die Spannung des Generators (33) erreicht die Generator-Hochspannung (Valt _haute) oder das Fahrzeug befindet sich nicht mehr im zweiten Typ von Fahrphasen.

4. Verfahren nach Anspruch 3, wobei, wenn die Generator-Hochspannung (Valt _haute) erreicht ist, die Spannung des Generators (33) auf dieser Generator-Hochspannung (Vmax, Valt_haute) gehalten wird, bis eine der folgenden Bedingungen erfüllt ist: ein charakteristischer Wert des Ladezustands der elektrischen Speicherbatterie (37) erreicht einen Aufladeschwellwert oder das Fahrzeug befindet sich nicht mehr im zweiten Typ von Fahrphasen.

5. Verfahren nach einem der vorhergehenden Ansprüche, wobei, wenn ein für den Ladezustand der elektrischen Speicherbatterie (37) charakteristischer Wert einen Aufladeschwellwert erreicht, oder wenn das Fahrzeug sich nicht mehr im zweiten Typ von Fahrphasen befindet, und wenn die Spannung des Generators (33) höher ist als eine vordefinierte Ladeendespannung (Valt _basse), eine Verringerung der vom Generator (33) gelieferten Spannung, der vom Generator (33) erreichten maximalen Spannung (Vₘₐₓ), zur Ladeendespannung hin vorgegeben wird, indem zunächst eine dritte Spannung-Abwärtsstufe (25) vorgegeben wird, die eine vordefinierte Spannung-Abwärtsamplitude hat, wenn die Differenz zwischen der erreichten maximalen Spannung und der Ladeendespannung im Absolutwert strikt größer ist als die Spannung-Abwärtsamplitude.

6. Verfahren nach Anspruch 5, wobei anschließend die Spannung weiter zur Ladeendespannung abnehmen gelassen wird, mit einer Abnahmesteigung (γ) im Mittel strikt geringer als die Steigung der dritten Spannungsstufe (α').

7. Verfahren nach Anspruch 5, wobei nach der dritten Spannungsstufe (25) eine Folge vierter Spannungsstufen (26, 27) vorgegeben wird, die je im Wesentlichen ein gleiches Spannung-Abwärtsinkrement (dV_{down}) strikt niedriger als die Abwärtsamplitude (ΔV_{down}) der dritten Spannungsstufe (25) darstellen und voneinander durch ein gleiches Abwärtszeit-Inkrement (dt_{down}) getrennt sind.

8. System (31) zur Versorgung eines Fahrzeugs mit elektrischer Energie, wobei das System enthält:
- ein Stromnetz (32), das mindestens ein stromverbrauchendes Element (36) aufweist,
- eine mit dem Stromnetz (32) verbundene elektrische Speicherbatterie (37),
- einen steuerbaren Generator (33), der mit dem Stromnetz (32) verbunden und fähig ist, an das Stromnetz (32) eine elektrische Energie unter einer Sollspannung zu liefern, die auf mindestens eine Generator-Niederspannung (Valt_basse), die auf einen strikt positiven konstanten Wert (Valt_basse) geregelt ist, und auf eine Generator-Hochspannung (Valt_haute) steuerbar ist, die auf einen konstanten Wert strikt höher als die Generator-Niederspannung (Valt_basse) geregelt ist,
**dadurch gekennzeichnet, dass** das System (31) zur Versorgung eines Fahrzeugs mit elektrischer Energie eine elektronische Steuereinheit (10) enthält, die mit dem Generator (33) und mit der elektrischen Speicherbatterie (37) verbunden und konfiguriert ist, dem Generator (33) unter vorbestimmten Fahrbedingungen des Fahrzeugs, wie während einer Phase regenerativen Bremsens des Fahrzeugs, eine Erhöhung der vom Generator (33) gelieferten Spannung von einer Generator-Niederspannung (Valt_basse) zu einer Generator-Hochspannung (Valt_haute) vorzugeben, wobei die elektronische Steuereinheit (10) konfiguriert ist, eine erste Spannungsstufe (2, 12) vordefinierter Amplitude (ΔVᵤₚ), gefolgt von einem Steigungsbruch (38) der vom Generator gelieferten Spannungskurve abhängig von der Zeit, und gefolgt von einer zunehmenden Spannungskurve mit einer mittleren Steigung (β) strikt geringer als die Spannungsanstiegssteigung (α) der ersten Stufe (2, 12) vorzugeben, um die Spannung während eines ersten vordefinierten Zeitintervalls nach dem Steigungsbruch (38) auf einem ersten Spannungsplateau (Vₚ₁) konstant zu halten, und um nach dem ersten Plateau die vom Generator (33) gelieferte Spannung durch eine Folge zweiter Spannungsstufen (3, 4, 5, 6, 13, 14, 15, 16, 17, 18, 19, 20, 21) weiter zu erhöhen, die je ein ansteigendes Spannungsinkrement (dVᵤₚ) gleicher Amplitude oder Amplituden gemäß einer vordefinierten gleichmäßigen Progression darstellen, die strikt niedriger sind als die Amplitude der ersten Spannungsstufe (ΔVᵤₚ).

## Claims

1. Method for recovering electrical energy during a phase of deceleration of a motor vehicle equipped with at least one rechargeable electric battery (37) connected to an electrical network (32) comprising at least one electrical consumer member (36) and a controllable alternator (33) connected to the electrical network (32), wherein a low alternator voltage (Valt_low) regulated at a constant value is imposed during a first type of vehicle driving phase, and a high alternator voltage (Valt_high) regulated at a constant value, higher than the low alternator voltage (Valt_low), is imposed during a second type of vehicle driving phase, such as a vehicle regenerative braking phase, **characterized in that**:
- the transition from the low alternator voltage (Valt _low) to the high alternator voltage (Valt_high) is carried out by imposing a first voltage step (2, 12) of predefined amplitude (ΔVᵤₚ), followed by a change of slope (38) in the voltage curve, said voltage curve delivered by the alternator as a function of time then continuing into at least a second voltage rise phase of which the average slope (β) is strictly lower than the slope (α) of the voltage rise of the first step (2,12),
- after the change of slope (38), the voltage is maintained constant at a first voltage level (Vₚ₁) for a first predefined time interval, after the first level, the voltage delivered by the alternator (33) continues to be increased by a succession of second voltage steps (3, 4, 5, 6, 13, 14, 15, 16, 17, 18, 19, 20, 21), each one representing an upward voltage increment (dVᵤₚ) of the same amplitude or amplitudes following a predefined regular progression, which are strictly smaller than the amplitude of the first voltage step (ΔVᵤₚ).

2. Method according to Claim 1, wherein one and the same second time interval (dtᵤₚ) is imposed between the start of two second voltage steps.

3. Method according to either one of the preceding claims, wherein the voltage delivered by the alternator (33) continues to be increased until one of the following two conditions is met: the voltage of the alternator (33) reaches the high alternator voltage (Valt_high), or the vehicle is no longer in the second type of driving phase.

4. Method according to Claim 3, wherein, once the high alternator voltage (Valt_high) is reached, the voltage of the alternator (33) is maintained at this high alternator voltage ((Vmax, Valt_high) until one of the following conditions is met: a characteristic value of the state of charge of the rechargeable electric battery (37) reaches a recharge threshold value, or the vehicle is no longer in the second type of driving phase.

5. Method according to any one of the preceding claims, wherein, when a characteristic value of the state of charge of the rechargeable electric battery (37) reaches a recharge threshold value, or when the vehicle is no longer in the second type of driving phase, and the voltage of the alternator (33) is higher than a predefined end-of-charge voltage (Valt_low), a reduction in the voltage delivered by the alternator (33) is imposed, from the maximum voltage (Vₘₐₓ) reached by the alternator (33) to an end-of-charge voltage, by firstly imposing a third downward voltage step (35) having a predefined downward voltage amplitude, if the difference between the maximum voltage reached and the end-of-charge voltage is strictly greater in terms of absolute value than the downward voltage amplitude.

6. Method according to Claim 5, wherein reducing of the voltage is then continued towards the end-of-charge voltage with a decrease slope (γ) that is strictly smaller on average than the slope of the third voltage step (α').

7. Method according to Claim 5, wherein, after the third voltage step (25), a succession of fourth voltage steps (26, 27), each representing substantially one and the same downward voltage increment (dV_{down}) strictly smaller than the downward amplitude (ΔV_{down}) of the third voltage step (25), and separated from one another by one and the same downward time increment (dt_{down}), is imposed.

8. Electrical power supply system (31) for a vehicle, the system comprising:
- an electrical network (32) comprising at least one electrical consumer member (36),
- a rechargeable electric battery (37) connected to the electrical network (32),
- a controllable alternator (33) connected to the electrical network (32) and able to deliver electrical energy to the electrical network (32) at a setpoint voltage that can be controlled at at least a low alternator voltage (Valt _low) regulated at a strictly positive constant value (Valt_low) and at a high alternator voltage (Valt_high) regulated at a constant value strictly higher than the low alternator voltage (Valt_low),
**characterized in that** the electrical power supply system (31) for a vehicle comprises an electronic control unit (10) connected to the alternator (33) and to the rechargeable electric battery (37) and configured to impose on the alternator (33), during predetermined vehicle driving conditions such as during a vehicle regenerative braking phase, an increase in the voltage delivered by the alternator (33), from a low alternator voltage (Valt_low) to a high alternator voltage (Valt_high), the electronic control unit (10) being configured to impose a first voltage step (2, 12) of predefined amplitude (ΔVᵤₚ), followed by a change of slope (38) in the voltage curve delivered by the alternator as a function of time, and followed by a rising voltage curve of which the average slope (β) is strictly lower than the slope (α) of the voltage rise of the first step (2, 12), to maintain the voltage constant at a first voltage level (Vₚ₁) for a first predefined time interval after the change of slope (38) and to continue to increase, after the first level, the voltage delivered by the alternator (33) by a succession of second voltage steps (3, 4, 5, 6, 13, 14, 15, 16, 17, 18, 19, 20, 21), each one representing an upward voltage increment (dVᵤₚ) of the same amplitude or amplitudes following a predefined regular progression, which are strictly smaller than the amplitude of the first voltage step (ΔVᵤₚ) .
